Europäisches Patentamt

(19) European Patent Office

Office européen des brevets

(11) Publication number : **0 315 634 B1**

(12) # EUROPEAN PATENT SPECIFICATION

(45) Date of publication of patent specification :
**19.06.91 Bulletin 91/25**

(51) Int. Cl.⁵ : **B64F 1/14**

(21) Application number : **87904909.6**

(22) Date of filing : **28.07.87**

(86) International application number :
**PCT/GB87/00534**

(87) International publication number :
**WO 88/00906 11.02.88 Gazette 88/04**

(54) **AIRSHIP HANDLING SYSTEM.**

(30) Priority : **28.07.86 GB 8618319**

(43) Date of publication of application :
**17.05.89 Bulletin 89/20**

(45) Publication of the grant of the patent :
**19.06.91 Bulletin 91/25**

(84) Designated Contracting States :
**AT BE CH DE FR GB IT LI LU NL SE**

(56) References cited :
**DE-A- 498 253**
**FR-A- 432 689**
**US-A- 1 867 591**
**US-A- 3 605 935**

(73) Proprietor : **HUSAIN, Farouk**
**24A Aberdeen Road**
**London N5 2UH (GB)**
Proprietor : **MOWFORTH, Edwin**
**20 Blackheath Grove**
**Wonnersh, Surrey GU5 0PU (GB)**

(72) Inventor : **HUSAIN, Farouk**
**24A Aberdeen Road**
**London N5 2UH (GB)**
Inventor : **MOWFORTH, Edwin**
**20 Blackheath Grove**
**Wonnersh, Surrey GU5 0PU (GB)**

(74) Representative : **Rees, David Christopher et al**
**Kilburn & Strode 30 John Street**
**London WC1N 2DD (GB)**

EP 0 315 634 B1

# Description

This invention relates to the ground handling of an airship at an operating base.

Airships generally operate in a condition of either neutral or negative buoyancy. A neutrally buoyant airship can hover and hence can operate from a small ground area, but time is lost in manoueuvring at airspeeds too low for precise aerodynamic control in unsteady conditions, and in decelerating to and accelerating from the hovering mode. A negatively buoyant or 'heavy' airship cannot hover but must take off and land with an extended ground run which greatly increases the base area requirement, although control problems are less severe. If passengers are to be carried using either mode of operation, a further time penalty is inherent in disembarkation and embarkation, particularly where the mooring facilities are such that a 'one in, one out' sequence must be used to prevent the airship from rising. These factors may not be significant when airship applications permit relatively relaxed scheduling, but become critical if the airship is to be used for high-density scheduled passenger movement.

US Patent No 1867591 (Pranke) describes an airship handling platform to which an airship may be moored and which can be formed to align its axis with the wind direction. The system includes a winch to anchor the airship and to draw it down onto the platform, however, this would not function to arrest the progress of an airship in landing.

It is an object of the present invention to facilitate rapid passenger flow through an airship terminal using a small ground area and permitting operation over an adequate range of weather conditions.

According to the present invention, there is provided a platform on which an airship may alight and exchange its load, and from which the airship may take off, mounted on a circular track such that the platform may be turned to align its axis with the wind, characterised by an arrester system arranged to engage the airship to bring it to rest on the platform. The airship can thus be brought to rest in a shorter distance than would otherwise be normally practicable.

Preferably, the platform includes a track with at least one lift such that a module containing passengers or cargo may be transferred between the airship and the track, and at least one further lift arranged to transfer a module between the track and an exchange point at which passengers or cargo may be loaded and unloaded, independently of the position of the airship. The track is preferably a suspension track.

The platform also preferably includes a mooring system for the airship such that whilst moored the airship may have load added or removed, the mooring system also including means for moving the airship along the axis of the platform.

An accelerator system is also preferably provided to accelerate the airstip to attain its take-off speed on the platform in a shorter distance than would otherwise be normally practicable.

Preferably, the circular support track on which the platform rotates is mounted upon hydraulic actuators such that the platform may be raised and lowered vertically to facilitate the adherenre of the airship to an appropriate flight path on the landing approach.

Preferably, the circular support track on which the platform rotates is mounted upon actuators which may operate either collectively in order to raise or lower the platform vertically, or differentially in order to tilt the platform about the longitudinal and transverse axes form the purpose of facilitating waterborne installations or installations on a vessel.

The invention also extends to a system for handling an airship characterised in that it comprises : a platform as defined above ; a passenger or cargo module ; and means on the airship for receiving the passenger or cargo module and means on the airship for engaging the platform.

The invention may therefore provide an operating platform which can be rotated upon a circular track for the purpose of aligning it with the wind direction and amy incorporate additional articulation to raise, lower or tilt the platform for particular modes of operation and which also incorporates facilities for arresting, mooring and launching a suitably-fitted airship. The platform may further incorporate means of handling a loaded passenger module such that the module may be detached from or attached to the moored airship and transferred to and from a suitable position for the disembarkation and embarkation of passengers independently of the position of the airship.

A specific embodiment of the invention will now be described by way of example with reference to the accompanying drawing in which :

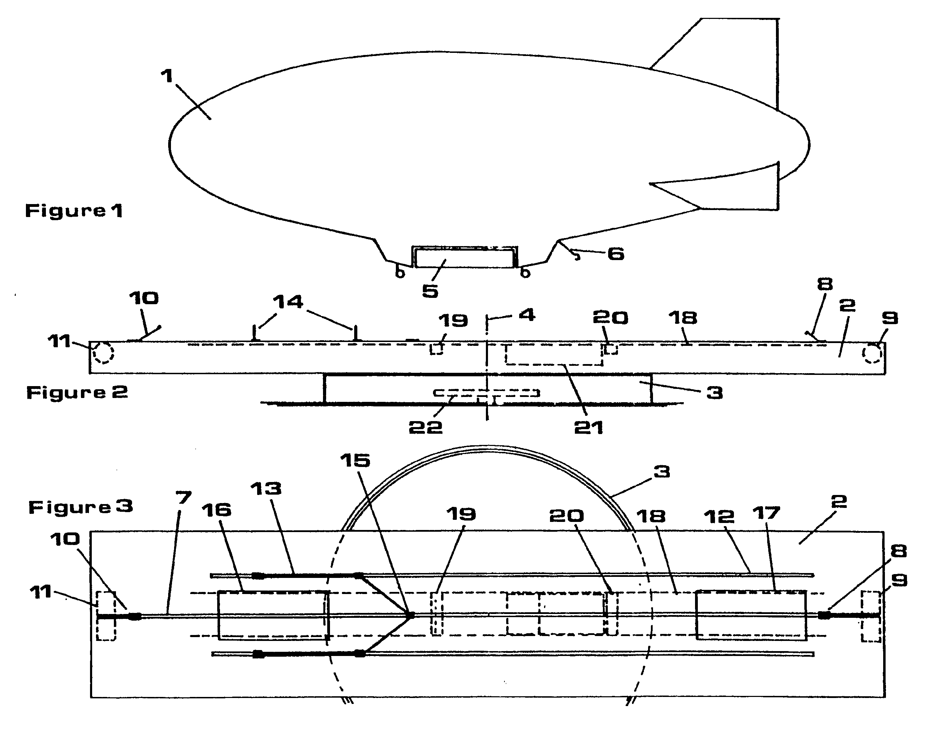

Figure 1 shows an airship suitably equipped for use with this system :

Figure 2 shows in simplified form an elevation of the platform :

Figure 3 shows in simplified form a partial plan of the platform.

The airship 1 alights upon and takes off from a platform 2 which is mounted upon a circular track 3 so that it may be rotated by a suitable power unit about a vertical axis 4 and hence aligned with the wind direction.

The airship carries passengers or cargo in a module 5 which may be readily attached to or detached from the airship body, and is further fitted with a retractable arrester hook 6.

A sunken rail 7 in the surface of the platform guides an arrester link 8 attached by cable to an arrester unit 9, and an accelerator link 10 attached by cable to an accelerator unit 1 1. Both links are attached to carriages running in the rail 7 so that upward loading may be resisted.

Two further sunken rails 12 guide a mooring carriage 13 which carries four retractable mooring stays 14 and incorporates a mooring link 15 running in the rail 7. The mooring carriage may be connected to the arrester link 8 or may be moved separately by a separate power unit which is not shown.

A forward module lift 16 and an aft module lift 17 transfer loaded modules 5 between the airship and the module rails 18, by means of which a suspended module 21 may be moved within the body of the platform using the powered forward module shunt 19 or the aft module shunt 20, running on the same suspension rails 18.

A third module lift 22 transfers loaded modules between the rails 18 and ground level, rotating the module in transit to align its axis either with the platform axis or with that of the ground reception unit through which passengers or cargo enter or leave the module.

The operational sequence commences with the platform aligned with the wind and the airship approaching into wind with the arrester hook 6 extended to engage a cable frame (not shown) and hence the arrester link 8. The arrester unit 9 thereby retards the airship so that it comes to rest over the forward module lift 16, final registration being adjusted through movable wheel pads which are not shown. In this position the arrester link 8 is connected to the mooring link 15 and the mooring stays 14 are extended and coupled to the body of the airship to hold it in position.

The incoming module is now detached from the airship and transferred by the forward module lift 16 to the suspension rails 18, and the arrester unit 9 is activated as a winch to draw the airship back above the aft module lift 17, drawing with it the accelerator link 10 which has meanwhile been attached to the airship body.

The aft module lift now transfers the outgoing module from the suspension rails 18 to the airship.

Finally the arrester link 8 and the mooring stays 14 are disconnected from the airship which then takes off under the combined impulse of its own power unit and the pull of the accelerator link 10, maintained by the accelerator unit 11.

During these airship movements on the platform, the outgoing module, after loading at ground level, was raised by the module lift 22 to engage the suspension rails and was then moved by the aft module shunt 20 into a suitable position to await elevation to the airship. The incoming module was then moved by the forward module shunt 19 to the module lift 22 and lowered to ground level for unloading.

After take-off all the units described are rearranged to receive the next incoming airship, the last incoming module now being serviced as necessary and presented as the next outgoing module.

Alternative arrangements of the system may incorporate :

– a retractable mast or mooring cables attachable to the nose of the airship, in place of the forward pair of the mooring stays 14 :
– a single module lift to handle both incoming and outgoing modules, in place of the two module lifts 16 and 17, with an appropriate rearrangement of the handling sequence.

## Claims

1. A platform (2) on which an airship (1) may alight and exchange its load, and from which the airship may take off, mounted on a circular track (3) such that the platform (2) may be turned to align its axis (4) with the wind, characterised by an arrester system (8, 9) arranged to engage the airship (1) to bring it to rest on the platform (2).

2. A platform as claimed in Claim 1, characterised by a track with at least one lift (16, 17) such that a module (5) containing passengers or cargo may be transferred between the airship (1) and the track.

3. A platform as claimed in Claim 1 or Claim 2, characterised by at least one further lift (22) arranged to transfer a module (5) between the track and an exchange point at which passengers or cargo may be loaded and unloaded, independently of the position of the airship (1).

4. A platform as claimed in Claim 2 or claim 3, characterised in that the trach is a suspension track.

5. A platform as claimed in any preceding claim, characterised by a mooring system (14, 15) for the airship (1), such that whilst moored the airship (1) may have load added or removed, the mooring system also including means for moving the airship (1) along the axis of the platform (2).

6. A platform as claimed in any preceding claim, characterised by an accelerator system (10, 11) arranged to accelerate the airship (1) to attain its take-off speed on the platform (2).

7. A platform as claimed in any preceding claim characterised in that the circular support track (3) on which the platform (2) rotates is mounted upon hydraulic actuators such that the platform (2) may be raised and lowered vertically to facilitate the adherence of the airship (1) to an appropriate flight path on the landing approach.

8. A platform as claimed in any preceding claim characterised in that the circular support track (3) on which the platform (2) rotates is mounted upon actuators which may operate either collectively in order to raise or lower the platform vertically, or differentially in order to tilt the platform about the longitudinal and transverse axes for the purpose of facilitating water-borne installations or installations on a vessel.

9. A system for handling an airship (1) characterised in that it comprises : a platform as claimed in any preceding claim ; a passenger or cargo module (5) ; and means on the airship (1) for receiving the passenger or cargo module (5) and means on the airship for engaging the platform (2).

## Ansprüche

1. Plattform (2), an der die Ladung eines Luftschiffes (1) entladen und gewechselt werden und von der das Luftschiff abheben kann, die derart auf einer kreisförmigen Führungsbahn (3) montiert ist, daß sie drehbar ist, um in Achsenrichtung (4) mit dem Wind zu fluchten, gekennzeichnet durch eine Landebremsvorrichtung (8, 9), die zum Angriff an dem Luftschiff (1) ausgebildet ist, um es zum Aufruhen auf der Plattform (2) zu bringen.

2. Plattform nach Anspruch 1, gekennzeichnet durch eine Führungsbahn mit wenigstens einer Hebevorrichtung (16, 17), so daß ein Passagiere oder Fracht enthaltendes Modul (5) zwischen dem Luftschiff (1) und der Führungsbahn verlagert werden kann.

3. Plattform nach Anspruch 1 oder 2, gehennzeichnet durch wenigstens eine weitere Hebevorrichtung (22), die zur Versetzung eines Moduls (5) zwischen der Führungsbahn und einer Station, an der Passagiere oder Fracht unabhängig von der Position des Luftschiffes (1) geladen und entladen werden können.

4. Plattform nach Anspruch 2 oder 3, dadurch gekennzeichnet, daß die Führungsbahn eine Hänge-Führungsbahn ist.

5. Plättform nach einem der vorangehenden Ansprüche, gekennzeichnet durch ein Verankerungs-System (14, 15) für das Luftschiff (1), so daß Fracht auf das verankerte Luftschiff (1) geladen oder von diesem entladen werden kann, wobei das Verankerungs-System auch Vorrichtungen zum Bewegen des Luftschiffes entlang der Achsenrichtung der Plattform (2) aufweist.

6. Plattform nach einem der vorangehenden Ansprüche, gekennzeichnet durch ein Beschleunigungs-System (10, 11), das zur Beschleunigung des Luftschiffes (1) ausgebildet ist, um seine Abhebegeschwindigkeit auf der Plattform (2) zu erreichen.

7. Plattform nach einem der vorangehenden Ansprüche, dadurch gekennzeichnet, daß die kreisförmige Stütz-Führungsbahn (3), auf der sich die Plattform dreht, auf hydraulischen Stellantrieben montiert ist, so daß die Plattform (2) vertikal gehoben oder gesenkt werden kann, um das Verbleiben des Luftschiffes auf einer entsprechenden Flugbahn beim Landen zu erleichtern.

8. Plattform nach einem der vorangehenden Ansprüche, dadurch gekennzeichnet, daß die kreisförmige Stütz-Führungsbahn (3), auf der sich die Plattform (2) dreht, auf Stellantrieben montiert ist, die sowohl gemeinsam arbeiten können, um die Plattform vertikal anzuheben oder zu senken, als auch einzeln, um die Plattform um ihre Achsen in Längs- und Querrichtung zu kippen, um Wasserinstallationen bzw. Installationen an einem Luftschiff zu erleichtern.

9. System zum Manövrieren eines Luftschiffes (1), dadurch gekennzeichnet, daß es eine Plattform gemäß den vorangehenden Ansprüchen, ein Passagier- oder Frachtmodul (5) und Vorrichtungen am Luftschiff (1) zur Aufnahme des Passagieroder Frachtmoduls (5) und Vorrichtungen am Luftschiff zum Angriff an der Plattform (2) aufweist.

## Revendications

1. Plate-forme (2) sur laquelle un dirigeable (1) peut se poser et échanger sa charge, et de laquelle ce dirigeable peut décoller, montée sur une voie circulaire (3) telle que la plate-forme (2) puisse être tournée pour aligner son axe (4) dans le sens du vent, caractérisée par un système d'arrêt (8, 9) propre à venir en prise avec le dirigeable (1) pour l'amener à se poser sur la plate-forme (2).

2. Plate-forme suivant la revendication 1, caractérisée par une voie pourvue d'au moins un élévateur (16, 17) tel qu'un module (5), contenant des passagers ou une cargaison, puisse être transféré entre le dirigeable (1) et la voie.

3. Plate-forme suivant la revendication 1 ou 2, caractérisée par au moins un autre élévateur (22) propre à transférer un module (5) entre la voie et un point de transfert où des passagers ou une cargaison peuvent être chargés et déchargés, indépendamment de la position du dirigeable (1).

4. Plate-forme suivant la revendication 2 ou 3, caractérisée en ce que la voie est une voie suspendue.

5. Plate-forme suivant l'une quelconque des revendications précédentes, caractérisée par un système d'amarrage (14, 15) pour le dirigeable (1) tel que, tandis que le dirigeable (1) est amarré, il peut recevoir une charge ou être débarrassé de celle-ci, le système d'amarrage comprenant également des moyens pour déplacer le dirigeable (1) le long de l'axe de la plate-forme (2).

6. Plate-forme suivant l'une quelconque des revendications précédentes, caractérisée par un système d'accélération (10, 11) propre à faire accélérer le dirigeable (1) pour lui permettre d'atteindre sa vitesse de décollage sur la plate-forme (2).

7. Plate-forme suivant l'une quelconque des revendications précédentes, caractérisée en ce que la voie de support circulaire (3) sur laquelle la plate-forme (2) tourne, est montée sur des actionneurs hydrauliques tels que la plate-forme (2) puisse être élevée et abaissée verticalement pour faciliter le respect par le dirigeable (1) d'une trajectoire de vol appropriée lors de son approche pour l'atterrissage.

8. Plate-forme suivant l'une quelconque des revendications précédentes, caractérisée en ce que la voie de support circulaire (3), sur laquelle la plate-forme (2) tourne, est montée sur des actionneurs qui peuvent fonctionner soit collectivement afin d'élever ou d'abaisser la plate-forme verticalement, soit différentiellement afin d'incliner la plate-forme autour des axes longitudinaux et transversaux en vue de faciliter l'utilisation d'installations flottantes ou d'installations à bord d'un navire.

9. Système pour manutentionner un dirigeable (1), caractérisé en ce qu'il comprend une plate-forme suivant l'une quelconque des revendications précédentes, un module pour passagers ou pour cargaison (5) et des moyens sur le dirigeable (1) pour recevoir le module pour passagers ou pour cargaison (5) et d'autres moyens sur le dirigeable pour venir en prise avec la plate-forme (2).

**Figure 1**

1

6

5

6

**Figure 2**

10

14

19    4    20    18

8    2    9

11

22    21    3

**Figure 3**

15    3

13    19    20    18    12    17    2

7    16    8

10    9

11

EP 0 315 634 B1